# EUROPEAN PATENT APPLICATION

(11) **EP 1 839 751 A1**
(43) Date of publication of application: **03.10.2007**
(21) Application number: 07013990.2
(22) Date of filing: 13.07.2006
(51) Int. Cl.: B01L 3/00, B01J 19/00

(54) **Cartridge for chemical reaction and information managing apparatus**

(30) Priority: 15.07.2005 JP 2005206354
(62) Divisional of application: 06014618.0
(71) Applicant: Yokogawa Electric Corporation, Tokyo 180-8750 (JP)
(72) Inventor: Katsurai, Toru, Musashino-shi Tokyo 180-8750 (JP); Tanaami, Takeo, Musashino-shi Tokyo 180-8750 (JP)
(74) Representative: Grünecker, Kinkeldey, Stockmair & Schwanhäusser Anwaltssozietät

(57) **Abstract**

An information managing apparatus for handling a cartridge for a chemical reaction, the information managing apparatus comprising a communication section for performing a communication with the cartridge, wherein the cartridge causes the chemical reaction by feeding a liquid in an inner part of the cartridge by deformation when an external force is applied, and the cartridge has an RF tag.

## Description

This application claims foreign priority based on Japanese Patent Application No. 2005-206354, filed July 15, 2005, the content of which is incorporated herein by reference in its entirety.

### BACKGROUND OF THE INVENTION

### 1. Field of the Invention

The present invention relates to a cartridge for a chemical reaction for causing a chemical reaction by feeding liquid in an inner part of the cartridge in accordance with deformation when an external force is applied.

### 2. Description of the Related Art

A cartridge for a chemical reaction is known that generates a chemical reaction by feeding liquid in an inner part of the cartridge in accordance with deformation when an external force is applied (for instance, refer to JP-A-2005-37368).

When various kinds of tests are carried out by using the cartridge for a chemical reaction, the cartridge needs to be carefully associated with a testing object. As an ordinary method, it is thought that when the cartridge is produced, a bar code is attached to the cartridge so as to associate a code indicated by the bar code with the testing object.

However, when the bar code being attached to the cartridge in advance when the cartridge is produced is employed, an operation is necessary for associating the code indicated by the bar code with the testing object during various times at testing, so the error may occur.

Further, the bar code may be stained or broken by a process prior to test so that the bar code cannot be read. There is also the possibility that an adhesive agent for attaching the bar code to the cartridge causes contamination. Since some of the testing objects dislike light, the reading operation of the bar code may cause difficulty during the testing. Since the bar code cannot be ordinarily written by a user, the information of the cartridge or an inner reagent cannot be freely recorded.

### SUMMARY OF THE INVENTION

The present invention has been made in view of the above circumstances, and provides a cartridge for a chemical reaction that can eliminate human errors and improve convenience by managing information for each cartridge.

In some implementations, a cartridge of the invention which causes a chemical reaction by feeding liquid in an inner part of the cartridge by deformation when an external force is applied comprises:
a substrate;
an elastic member being overlaid on the substrate; and
an attaching section for attaching an RF tag to the cartridge.

According to the cartridge for a chemical reaction of the present invention, since the attaching section is provided for attaching the RF tag to the cartridge, the RF tag can be attached to the cartridge depending on the situation of a user and can be used to manage information.

- In some implementations, a cartridge of the invention which causes a chemical reaction by feeding liquid in an inner part of the cartridge by deformation when an external force is applied comprises:
a substrate;
an elastic member being overlaid on the substrate; and
an RF tag arranged in the cartridge.

According to the cartridge for a chemical reaction of the present invention, since the RF tag is arranged in the cartridge, each cartridge can be managed using the information written in the RF tag.

The RF tag may be attached to a component member of the cartridge.

The RF tag may be located in the liquid in the inner part of the cartridge.

The RF tag may measure a physical quantity.

In the cartridge of the invention, at least one of information related to a sample fed or to be fed in the cartridge, information related to a reagent fed or to be fed in the cartridge, or information related to the cartridge is written in the RF tag.

In some implementations, an information managing apparatus of the invention for handling a cartridge for a chemical reaction comprises:
a communication section for performing a communication with the cartridge,
wherein the cartridge causes the chemical reaction by feeding a liquid in an inner part of the cartridge by deformation when an external force is applied, and
the cartridge has an RF tag.

According to the information managing apparatus of the present invention, since a communication section is provided for performing the communication with the RF tag, information management can be done for each cartridge using the RF tag.

The information managing apparatus of the invention further comprises:
a testing section for testing the cartridge; and
an associating section for associating information obtained from the RF tag through communication by the communication section with a test result obtained from the cartridge by the testing section

In this case, since the associating section associates the information obtained from the RF tag with the test result obtained form the cartridge by the testing section, a human error can be eliminated.

In the cartridge for a chemical reaction of the present invention, since the attaching section is provided for attaching the RF tag to the cartridge, the RF tag can be attached to the cartridge depending on the situation of a user and can be used to manage information.

In the cartridge for a chemical reaction of the present invention, since the RF tag is arranged in the cartridge, each cartridge can be managed using the information written in the RF tag.

In the information managing apparatus of the present invention, since a communication section is provided for performing the communication with the RF tag, information management can be done for each cartridge using the RF tag.

### BRIEF DESCRIPTION OF THE DRAWINGS

Fig. 1A is a plan view showing a structure of a cartridge for a chemical reaction of an embodiment.
Fig. 1B is a sectional view taken along a line Ib-Ib of Fig. 1A.
Fig.2 is a sectional view showing a state of a transfer of solution.

### DESCRIPTION OF THE PREFERRED EMBODIMENTS

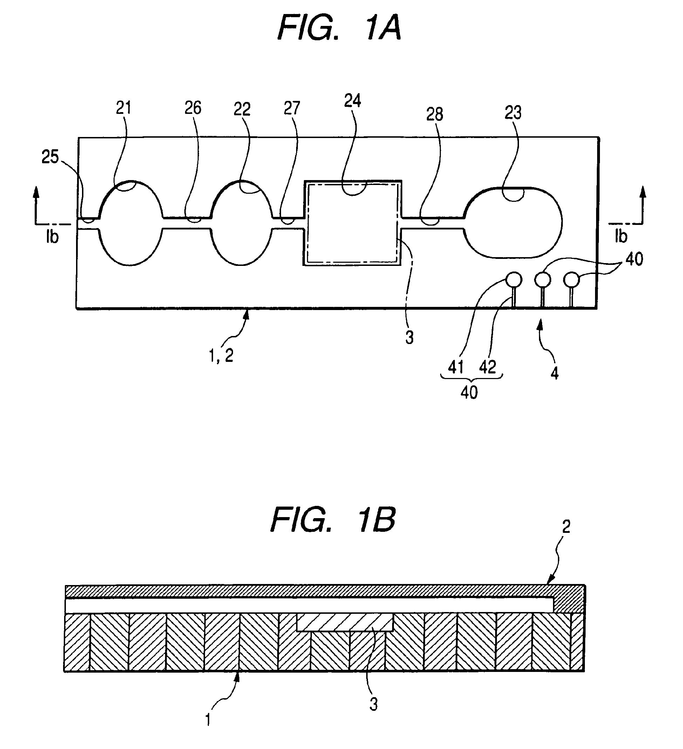

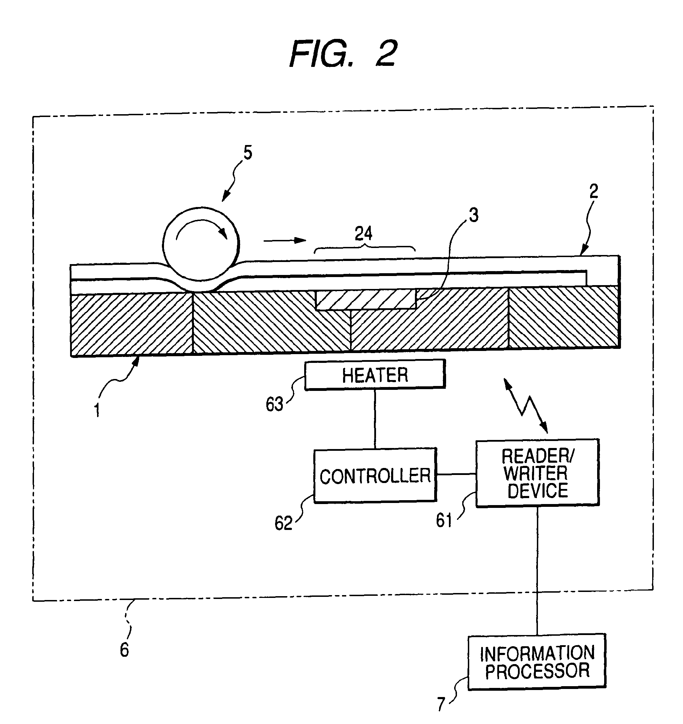

Now, referring to Figs. 1A, 1B and 2, the present invention will be described below. This embodiment exemplifies the cartridge for a chemical reaction in which a planar type chip is incorporated.

Fig. 1A is a planar view showing a cartridge for a chemical reaction of this embodiment. Fig. 1B is a sectional view taken along a line Ib-Ib of Fig. 1A.

As shown in Figs. 1A and 1B, the cartridge for a chemical reaction includes a substrate 1 and an elastic member 2 overlaid on substrate 1.

On a back surface of the elastic member 2 (the lower surface in Fig. 1B), a recessed part with a prescribed shape is formed that is recessed towards the surface side (the upper surface in Fig. 1B). This recessed part forms a space between the cartridge substrate 1 and elastic member 2 to form chambers 21, 22 and 23 for accommodating solutions, an accommodating section 24 for accommodating a below-described chip 3 and passages 25, 26, 27 and 28. As shown in Fig. 1, passage 25, chamber 21, passage 26, chamber 22, passage 27, accommodating section 24, passage 28 and chamber 23 are sequentially communicated with each other.

In an area except the recessed part, the substrate 1 is bonded to elastic member 2. Accordingly, the solution accommodated in the recessed part can be sealed in the cartridge to prevent the solution from leaking outside.

As shown in Figs. 1A and 1B, a target molecule detecting chip 3 is accommodated in substrate 1.

Chip 3 is a planar-type chip for detecting a target molecule by hybridization. On the surface of chip 3 (the upper surface in Fig. 1B), detecting portions to which probes corresponding to respective target molecules are fixed are arranged two-dimensionally.

As shown in Fig. 1A, an area 4 in which an RF tag (a radio frequency tag) can be embedded is provided in elastic member 2. In this area 4, cut-out parts 40 for embedding the RF tags are formed. The cut-out part 40 includes an accommodating section 41 for the RF tag and an introducing hole 42 communicating with the accommodating section 41 from the side surface of elastic member 2 . The RF tag is pushed into accommodating section 41 via the introducing hole 42 by using the elastic deformation of the elastic member 2, so that the RF tag can be fixed to the inner part of accommodating section 41.

Now, a procedure of a test by the cartridge will be described below. Fig. 2 is a sectional view showing a state of transfer of the solution.

As shown in Fig. 2, the cartridge is accommodated in the prescribed part of a testing device 6. The solution to be tested is injected into chamber 21 of the cartridge. The solution is injected by inserting an injector needle through passage 25. A plug (not shown in the drawing) made of an elastic member is attached to passage 25 to create a sealed state. When the solution is injected, the injector needle is pushed through the plug. After the solution is injected, the needle hole of the plug is closed when the injector needle is pulled out to ensure a sealed state.

Further, a reagent necessary for the test can be placed beforehand in a prescribed chamber of the cartridge. For example, the target molecule can be detected during test when the reagent reacts with a sample.

Then, as shown in Fig. 2, as roller 5 provided in testing device 6 is moved rightward, roller 5 also presses elastic member 2 towards the substrate 1. By such an operation, the solution injected into chamber 21 is supplied to accommodating section 24 through passage 26, chamber 22 and passage 27. The reagent is also mixed with the solution injected into chamber 21.

In accommodating section 24, the hybridization in chip 3 is carried out by the solution supplied to the accommodating section 24. Further, when the roller 5 is moved rightward, waste liquid is accommodated in the chamber 23.

In testing device 6, a mechanism is provided for performing a test with respect to the chip 3 while the cartridge is accommodated therein. A heater for controlling the temperature of the solution in the cartridge can also be provided in testing device 6 as required.

In testing device 6, a reader/writer device 61 (communication section) is provided for reading the information of the RF tag embedded in the cartridge accommodated in testing device 6 (testing section) in a non-contact state, or writing information on the RF tag in a non-contact state. The reader/writer device 61 can supply electric power to the RF tag by using electromagnetic coupling, and can also perform a communication with the RF tag. An information processor 7 (communication section, testing section, associating section) connected to the reader/writer device 61 reads the information from the RF tag through the reader/writer device 61 and writes the information on the RF tag.

In this embodiment, the RF tag embedded in the cartridge can be employed for various purposes. For instance, an ID for identifying the cartridge can be written into the RF tag. In this case, while the cartridge is accommodated in the testing device 6, the cartridge can be specified by the information processor 7 so that a test result by the testing device 6 can be associated to the cartridge. Accordingly, an error wherein a cartridge is mistaken for another cartridge can be prevented. In the RF tag, an ID for specifying a sample and an ID for specifying the reagent can be written. For instance, when blood is extracted, data specifying the person to be inspected can be written in the RF tag.

Information such as the classification or the expiration data of the cartridge, the classification, expiration date, and quantity of the reagent can be written in the RF tag. In this case, the data of the RF tag is read to determine the classification or the expiration date. Therefore, the cartridge can be efficiently managed. The RF tag is especially preferable when a reagent such as an enzyme with a pressing expiration date is handled.

Processing conditions for the cartridge such as conditions for feeding the solution, temperatures for heating and cooling, and time for heating and cooling, or warning labels for managing the cartridge can be written in the RF tag. This information can be suitably read and the cartridge can be properly managed.

Arbitrary information can be written at an arbitrary timing in the RF tag also. For instance, the processing conditions performed in the testing device 6 and test results can be written in the RF tag as a history. Instructions for a post-process can also be written. Information related to the reagent can be written in the RF tag when- the reagent is injected into the cartridge. Since various kinds of information can be written at any time, the information having flexibility and reliability can be obtained from the cartridge.

The timing with which the RF tag is attached to the cartridge is not limited to when the cartridge is produced. A user can embed the RF tag in the cartridge at any time depending on the circumstances of the user.

In the above-described embodiment, the RF tag is embedded in elastic member 2 by using the elasticity of the elastic member 2. However, the RF tag may be bonded to the prescribed part of the cartridge or thermally sealed. The RF tag may be sealed in the cartridge or attached to the cartridge so that the RF tag is exposed to outside air or to the space in the cartridge.

The RF tag need not be fixed to the cartridge, and instead, the RF tag may be inserted into the reagent. In this case, during the process when the reagent is injected into the cartridge, the RF tag may also be injected at the same time. Therefore, a process for separately fixing the RF tag to the cartridge is not necessarilyrequired. The RF tag may contain information related to the reagent such as the classification or the expiration date of the reagent. Information that is not directly related to the reagent, such as information related to - the sample being tested or to be tested, information related to the cartridge, or the like may be written in the RF tag also.

The RF tag may also contain a temperature sensor, a pH sensor, a pressure sensor, or any other sensor used to measure a physical quantity. Measured results by such RF tags are read through the reader/writer device 61.

For instance, an RF tag with a temperature sensor may be fixed in the cartridge. Thus, the temperature of the cartridge can be managed during a heat treatment before or during test. By using the RF tag, the temperature can be measured in a non-contact state. Accordingly, the influence by thermal conduction which occurs when an ordinary temperature sensor is used can be avoided. A structure for performing a feedback control on the basis of the measured results read from the RF tag can be provided in the testing device 6 or in another device, so that the temperature of the cartridge can be properly controlled. For instance, as shown in Fig. 2, the temperature read by reader/writer device 61 of the testing device 6 may be supplied to controller 62 and a heater 63 by controller 62.

Alternatively, the RF tag with a temperature sensor may be exposed to the inner part of the cartridge and attached so that it can contact the solution. Then, the temperature of the solution can be measured more precisely.

The RF tag with a sensor function may be immersed in the solution. In this case, the state of the solution in the cartridge can be directly measured. For instance, when the RF tag with a temperature sensor or a pH sensor is immersed in the solution, the RF tag is transported together with the solution in the carriage. Therefore, the precise temperature and pH of the solution can always be measured. Even when the quantity of the solution is small, a precise measurement can be performed. For instance, when a specific DNA sequence is amplified by PCR (a polymerase chain reaction method), precise temperature control of the solution is necessary. In such a case, the above-described RF tag is preferable.

In the above-described embodiment, although the cartridge in which chip 3 is incorporated is shown as an example, the use of the cartridge is not limited in the present invention. The present invention is more generally applicable to any cartridge for a chemical reaction that causes a chemical reaction by feeding the liquid in the inner part in accordance with a deformation when an external force is applied.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

Furthermore, the application discloses a cartridge which causes a chemical reaction by feeding liquid in an inner part of the cartridge by deformation when an external force is applied, the cartridge comprising a substrate, an elastic member being overlaid on the substrate, and an attaching section for attaching an RF tag to the cartridge.

Said cartridge may further comprise a substrate, an elastic member being overlaid on the substrate, and an RF tag arranged in the cartridge.

In addition, the RF tag may be attached to a component member of the cartridge.

The cartridge may be located in the liquid in the inner part of the cartridge.

The cartridge may measure a physical quantity.

Furthermore, at least one of information related to a sample fed or to be fed in the cartridge, information related to a reagent fed or to be fed in the cartridge, or information related to the cartridge may be written in the RF tag.

Furthermore, at least one of information related to a sample fed or to be fed in the cartridge, information related to a reagent fed or to be fed in the cartridge, or information related to the cartridge may be written in the RF tag.

## Claims

1. An information managing apparatus for handling a cartridge for a chemical reaction, the information managing apparatus comprising:
a communication section (61) for performing a communication with the cartridge,
wherein the cartridge causes the chemical reaction by feeding a liquid in an inner part of the cartridge by deformation when an external force is applied, and
the cartridge has an RF tag.

2. The information managing apparatus according to claim 1, further comprising:
a testing section (6) for testing the cartridge; and
an associating section (61) for associating information obtained from the RF tag through communication by the communication section with a test result obtained from the cartridge by the testing section.
